# EUROPEAN PATENT SPECIFICATION

(11) **EP 4 500 631 B1**
(45) Date of publication and mention of the grant of the patent: **14.01.2026**
(21) Application number: 23713855.7
(22) Date of filing: 21.03.2023
(51) Int. Cl.: H01P 1/162, H01P 1/202, H01P 1/203, H01P 1/209

(54) **A FILTER ARRANGEMENT FOR QUANTUM PROCESSORS**
FILTERANORDNUNG FÜR QUANTENPROZESSOREN
AGENCEMENT DE FILTRE POUR PROCESSEURS QUANTIQUES

(30) Priority: 28.03.2022 SE 2230091
(43) Date of publication of application: 05.02.2025
(73) Proprietor: SWEDEN QUANTUM AB, 412 92 Göteborg (SE)
(72) Inventor: REHAMMAR, Robert, 442 91 Romelanda (SE); GASPARINETTI, Simone, 431 47 Mölndal (SE)
(74) Representative: Westpatent AB
(86) International application number: PCT/EP2023/057185
(87) International publication number: WO 2023/186621

(56) References cited:
- GB-A- 903 889
- US-A- 3 187 277
- US-A- 3 496 497
- US-A1- 2002 084 876
- Y. CHUNG ET AL: "Multifunctional Microstrip Transmission Lines Integrated With Defected Ground Structure for RF Front-End Application", IEEE TRANSACTIONS ON MICROWAVE THEORY AND TECHNIQUES, vol. 52, no. 5, 1 May 2004 (2004-05-01), USA, pages 1425 - 1432, XP055484903, ISSN: 0018-9480, DOI: 10.1109/TMTT.2004.827013
- WALKER CHRISTOPHER J ET AL: "Design of a Wideband Surface Mountable Suspended Integrated Strip-Line Technology", IEEE ACCESS, IEEE, USA, vol. 8, 14 October 2020 (2020-10-14), pages 188825 - 188832, XP011816359, DOI: 10.1109/ACCESS.2020.3031252

## Description

### TECHNICAL FIELD

The present disclosure relates to electrical filter arrangements for use with superconducting devices, in particular low-pass or bandpass filters for quantum processors. However, the disclosed filter arrangements can be used in any electrical application.

### BACKGROUND

Quantum processors typically operate using control signals the 1-10 GHz microwave regime. These processors, however, are sensitive to radiation/interference in a much broader frequency range. Radiation/interference with frequencies above to so called superconducting gap is particularly harmful, which is around 100 GHz for a typical quantum processor.

To protect devices from this relatively high frequency radiation/interference, filtering of the control signals is required. A common filter solution is to use electromagnetic absorbent material to fill transmission lines, such as between the inner and outer conductor in a coaxial cable. This provides a lowpass filter since electromagnetic absorbent material has higher attenuation the higher the frequency. However, it is difficult to construct such filter with decent matching across the in-band frequency range, i.e., the operating band for the control signals. There will also be significant attenuation in the in-band frequency range, which is also undesired.

Another filter solution is microwave lowpass filters based on resonant structures. These filters typically present good in-band performance in terms of matching and losses but present even worse attenuation performance compared to the absorber filter at high frequencies far away from the in-band frequencies, e.g., at 100 GHz relative to 1-10 GHz.

GB 903889 A discloses a filter for electromagnetic waves.

US 3187277 A relates to a waveguide harmonic suppressor.

US 3496497 A discloses a high-power harmonic suppression filter.

Chung et al., "Multifunctional Microstrip Transmission Lines Integrated with Defected Ground Structure for RF Front-End Application", IEEE Transactions on Microwave Theory and Techniques, vol. 52, no. 5, (2004), p. 1425-1432 is a scientific paper disclosing a filter arranged to suppress harmonics of a signal.

US 2002/084876 A1 discloses a transmission line with a slotted ground plane arranged to control the impedance of a trace.

Walker et al., "Design of a Wideband Surface Mountable Suspended Integrated Strip-Line Technology", IEEE Access, vol. 8, (2020) p. 188825-188832 discloses a low-loss integrated strip-line.

Stil, there is a need for improved filter arrangements for QPs.

### SUMMARY

It is an object of the present disclosure to provide improved filter arrangements of independent claims 1 and 8 for quantum processors, which, i.a., offer improved attenuation at high frequencies, such as 5-10 times higher than the band of interest, while presenting good in-band performance.

This object is at least in part obtained by a filter arrangement for a quantum processor. The filter arrangement comprises a waveguiding structure arranged to guide electromagnetic waves along a main waveguiding path between a first port and a second port. The waveguiding structure comprises a frequency-selective surface (FSS) arranged along at least a part of the main waveguiding path. The FSS is arranged to be electromagnetically reflective for a low-frequency band and arranged to be electromagnetically transparent in a direction away from the main waveguiding path at a high-frequency band.

The waveguiding structure is a structure guiding wave propagation and can, e.g., be a coaxial line, or transmission line.

The FSS significantly reduces the energy of electromagnetic waves in the high-frequency band that is coupled from the first port to the second port, i.e., propagating along the waveguiding structure between the first and second ports. Electromagnetic waves in the high-frequency band instead propagate from one of the ports and then away from the main waveguiding path, and not between the two ports. After propagating away from the waveguiding path, these high-frequency waves may be terminated in various ways, which is discussed in more detail below. The disclosed filter arrangement normally is a lowpass filter where the low-frequency band of the FSS defines the passband. However, a lower frequency cutoff may be introduced to instead form a bandpass filter.

There is nothing in the FSS that hinders high frequencies far away from the in-band frequency to propagate away from the main waveguiding path. Therefore, the disclosed filter maintains high isolation between the two ports at high frequencies far away from the in-band frequencies compared to known filter arrangements. For example, if the passband is 0-10 GHz, the high frequencies far away from the in-band frequencies could be above 50 GHz. According to other aspects, the frequencies far away from 0-10 GHz could be considered to be above 20 GHz. Since the FSS is reflective in the low-frequency band, the disclosed filter arrangement maintains good in-band performance in terms of matching and losses. In the low-frequency band, the filter arrangement behaves similar to a waveguiding structure without an FSS since the FSS is reflective for those frequencies.

According to aspects, the waveguiding structure is a coaxial line comprising an inner conductor and an outer conductor, wherein the FSS is arranged on the outer conductor and/or the inner conductor. This is a simple way of providing a waveguiding structure that supports low frequencies, i.e., from direct current (DC) and above. Thus, the coaxial line can provide a low-pass filter.

According to aspects, the FSS is arranged on at least the inner conductor, and wherein the inner conductor comprises an electromagnetic absorbent material. The electric field is typically strongest around the inner conductor. Therefore, arranging electromagnetic absorbent material inside the inner conductor comprising the FSS effectively attenuates frequencies in the high-frequency band of the FSS. According to aspects, the waveguiding structure is arranged for single mode wave propagation in the low-frequency band. Hindering higher order modes from propagating in the low-frequency band, i.e., passband of the filter is typically undesired.

According to aspects, the waveguiding structure is a planar transmission line comprising a conductive strip and a ground plane, wherein the FSS is arranged on the conductive strip and/or the ground plane. This type of waveguiding structure can be implemented using printed circuit boards (PCB), which is inexpensive and easy to manufacture. Planar transmission lines, and PCB-based transmission lines in particular, can be used to achieve high integration with other components, such as integrated circuits.

According to aspects, the first port and the second port are arranged to support wave propagation in the same frequency band. This frequency band is typically significantly wider than the low-frequency band of the FSS. For example, the lowest frequency of an upper band edge of the FSS can be 10 GHz and the frequency band of the first and the second ports can be 0-200 GHz.

According to aspects, the FSS is arranged along at least 25% of the main waveguiding path, preferably as least 50%, and more preferably at least 75%. This way, it is likely that waves in the high-frequency band will propagate away from the main waveguiding path, rather than between the first and the second ports when a signal is fed into one of the ports.

According to aspects, the filter arrangement comprises an absorber arrangement in connection to the FSS on a side facing away from the main waveguiding path of the waveguiding structure. With such arrangement, electromagnetic waves propagating away past the main waveguiding path of the filter arrangement can be attenuated effectively. The absorber arrangement hinders or at least reduces radiation in the high-frequency band away from the waveguiding path of the filter arrangement. This is normally desired as such radiation may leak into other parts of a system the filter arrangement is part of. In some applications, however, such radiation may not be of concern. The absorber arrangement also hinders unwanted radiation leaking into the main waveguiding path of the filter arrangement.

According to aspects, the filter arrangement comprises an electromagnetically reflective shielding body arranged to surround at least part of the waveguiding structure. The shielding body preferably completely shields the filter arrangement from electromagnetic radiation of any frequency except at the ports of the waveguiding structure. In other words, electromagnetic waves can only enter and leave the filter arrangement through the ports. The electromagnetically reflective shielding body typically comprises an electrically conductive surface.

Preferably, the shielding arrangement is used together with the absorber arrangement, where the absorber arrangement is arranged between the shielding arrangement and the main waveguiding path of the waveguiding structure. This way, electromagnetic waves in the high-frequency band will propagate from the FSS to the shielding arrangement via the absorber, then be reflected at the shielding arrangement and propagate through the absorber arrangement again. Thus, the combination prevents the high-frequency waves propagating back into the main waveguiding path, which is an advantage.

According to aspects, the FSS comprises a plurality of waveguide apertures arranged along the waveguiding structure, wherein each aperture is arranged to guide electromagnetic waves above a respective lower cutoff frequency along a respective aperture waveguiding path away from the main waveguiding path. The waveguide apertures form respective hollow waveguides where the respective lower frequency cutoff of the apertures are used to form the FSS. This type of FSS is easy to manufacture and provides a robust filter arrangement. This filter arrangement is also inherently non-resonant at frequencies above cut-off, making it easy to match and design for broad frequency operation.

According to aspects, the length of at least one aperture waveguiding path corresponds to a 0.05-0.5 wavelengths of a corresponding lower cutoff frequency of the waveguide aperture. This way, waves propagating along the main waveguiding path is not attenuated since it cannot propagate or tunnel through the aperture waveguiding paths. The evanescent field, that is, fields oscillating at frequencies below cut-off of the aperture waveguide is suppressed exponentially with the length of the aperture waveguiding path.

According to aspects, at least one waveguide aperture is rectangular. Other shapes are also possible, such as circular. A rectangular shaped with rounded corners is particularly simple to manufacture using, e.g., milling.

According to aspects, the aperture waveguiding path of at least one waveguide aperture is transversal to the main waveguiding path of the waveguiding structure. This way waves in the high-frequency band can easily propagate away from the main waveguiding path.

According to aspects, at least one waveguide aperture comprises a dielectric material occupying at least a part of its corresponding aperture waveguiding path. In other words, at least part of the aperture waveguiding path is filled with the dielectric material. This makes the waveguide aperture electrically larger relative to if it is air filled, for example. Typically, the higher dielectric constant, the better, since that will make the holes larger electrically and will open up for making the filter smaller. However, materials with a lower dielectric constant may be less expensive and have lower loss. Having too large a dielectric contrast between the main waveguiding path and the apertures might also reduce coupling since there may be surface reflections.

According to aspects, the dielectric material extends from the aperture waveguiding path of the waveguide aperture into the main waveguiding path of the waveguiding structure. This increases the portion of waves in the high-frequency band that propagate through the apertures rather than between the first and the second ports. In other words, the attenuation of the stopband of the filter arrangement is increased. High-dielectric constant materials acts like a potential well for the radiation, thus directing it towards the apertures.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described in more detail with reference to the appended drawings, where:
Figures 1A and 1B show different views of a filter arrangement;
Figures 2A and 2B show different aspects of a filter arrangement;
Figures 3A and 3B show different aspects of a filter arrangement;
Figures 4A and 4B show different aspects of a filter arrangement;
Figures 5-7 schematically illustrates filter arrangements;
Figures 8A and 8B show different filter arrangement;
Figures 9A and 9B are plots showing a scattering parameter versus frequency for different filter arrangements; and
Figures 10 shows an example filter arrangement.

### DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

As mentioned, there is a need for improved filter arrangements for quantum processors. Therefore, there is disclosed herein a filter arrangement 100 for a quantum processor. The filter arrangement comprises a waveguiding structure 110 arranged to guide electromagnetic waves along a main waveguiding path 111 between a first port 112 and a second port 113. The waveguiding structure 110 is mainly exemplified using a coaxial line. However, the waveguiding structure 100 may be other types of structures well, such as hollow waveguide, e.g., a rectangular and tubular waveguide with no inner conductor, and planar transmission line etc.

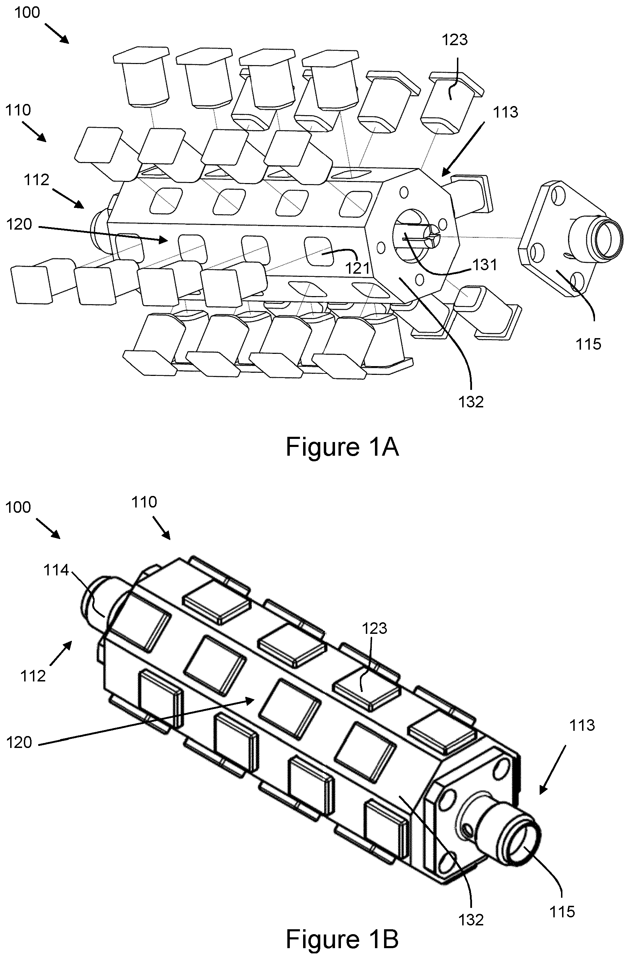

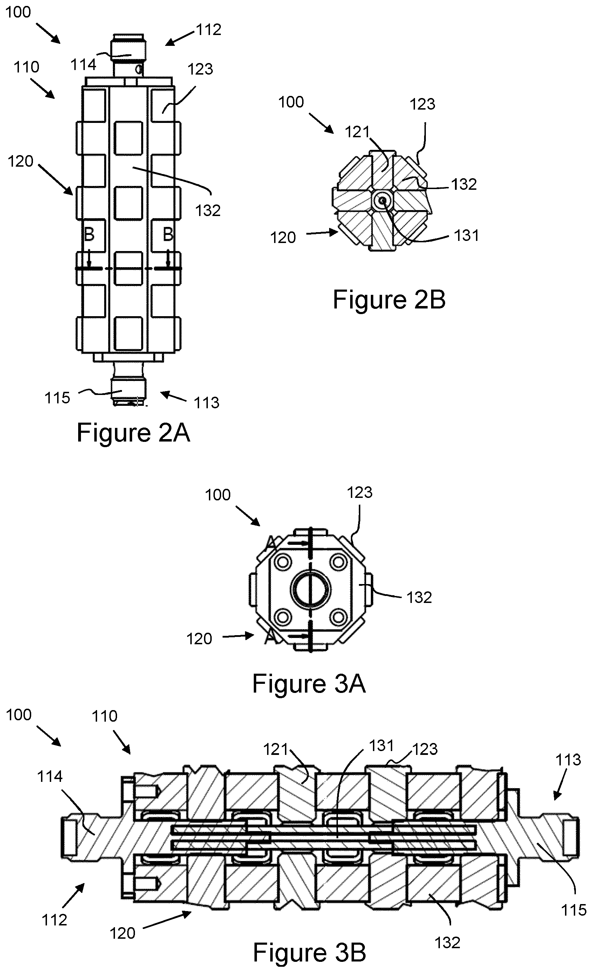

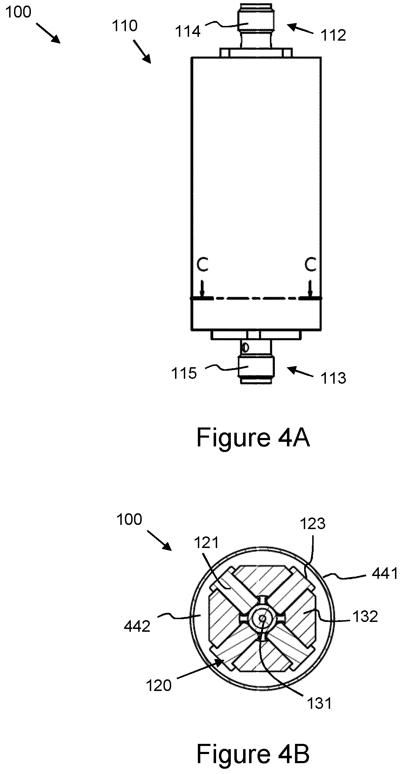

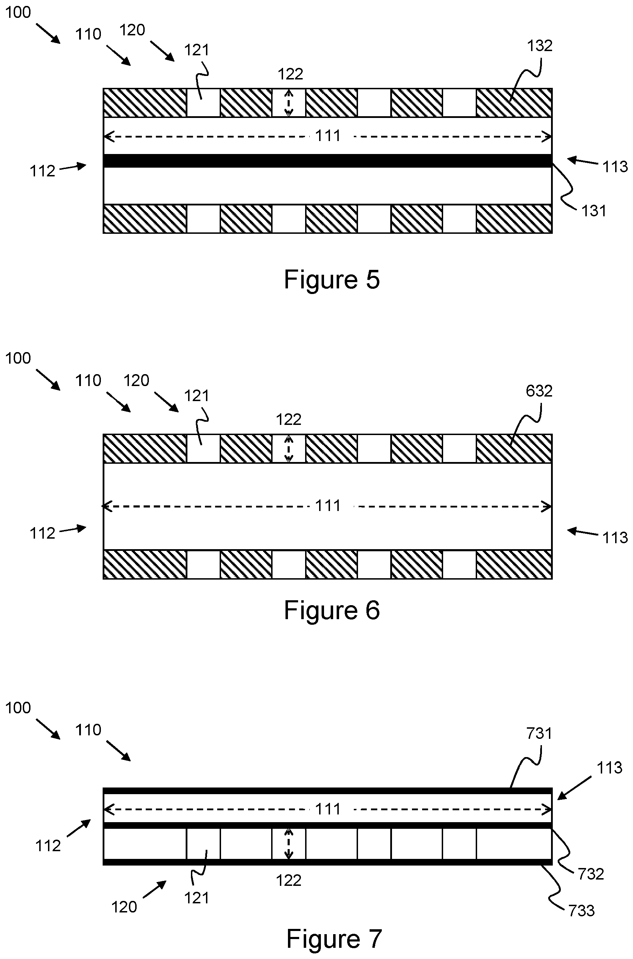

Figures 1A-5 and 8A-8B show example filter arrangements 100 where the waveguiding structure 110 is a coaxial line. More specifically, Figure 1A shows an exploded view of the assembled filter arrangement of Figure 1B. Figure 2B shows a cut along the line B-B in Figure 2A. Figure 3B shows a cut along the line A-A in Figure 3A. Figure 4B shows a cut along the line C-C in Figure 4A. Figure 5 shows a schematic illustration of a coaxial line implementation of the filter arrangement 100.

Figures 6 and 7 show an example filter arrangement where the waveguiding structure is a hollow waveguide and a planar transmission line, respectively.

The disclosed filter arrangement 100 is suitable for quantum processors. More generally, however, the filter arrangement can be useful to protect any superconducting circuit from unwanted generation of quasiparticles while ensuring good performance in the desired frequency band. More generally, the filter arrangement can be used to block very high-frequency radiation while still transmitting low to moderately high frequency waves in a transmission path. Even more generally, the disclosed filter arrangements can be used in any electrical application.

The waveguiding structure 110 of the filter arrangement 100 comprises a frequency-selective surface (FSS) 120 arranged along at least a part of the main waveguiding path 111. The FSS is arranged to be electromagnetically reflective for a low-frequency band and arranged to be electromagnetically transparent in a direction away from the main waveguiding path 111 at a high-frequency band.

The FSS significantly reduces the energy of electromagnetic waves in the high-frequency band that is coupled from the first port to the second port, i.e., propagating along the waveguiding structure between the first and second ports. Electromagnetic waves in the high-frequency band instead propagate from one of the ports and then leak away from the main waveguide path. It is thus highly attenuated in the propagation between the two ports. After propagating away from the main waveguiding path, these high-frequency waves may be terminated in various ways, which is discussed in more detail below.

The disclosed filter arrangement normally is a lowpass filter where the low-frequency band of the FSS defines the passband. However, a lower frequency cutoff be introduced to instead form a bandpass filter. There is nothing in the FSS that hinders high frequencies far away from the in-band frequency to propagate away from the main waveguiding path. Therefore, the disclosed filter maintains high attenuation between the two ports at high frequencies far away the in-band frequencies compared to known filter arrangements. Since the FSS is reflective in the low-frequency band, the disclosed filter arrangement maintains good in-band performance in terms of matching and losses. In the low-frequency band, the filter arrangement behaves similar to a waveguiding structure without an FSS.

Preferably, the FSS comprises a plurality of apertures, as is shown in Figures 1A-8B. However, other types of FSSs are also possible. FSSs are discussed in general below and the aperture implementation is discussed in detail.

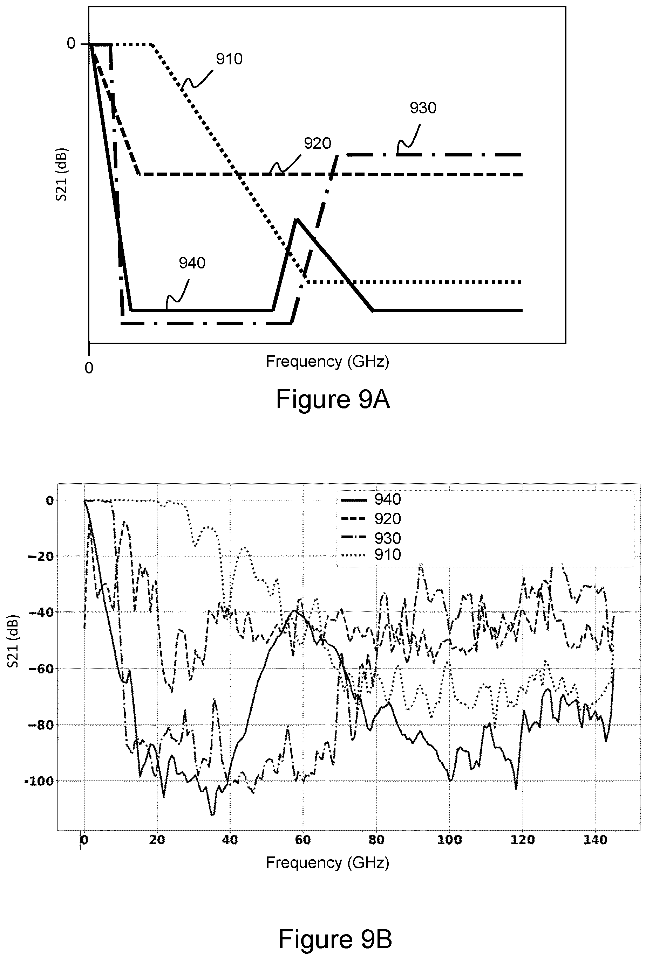

Figures 9A and 9B show example characteristics of an example embodiment of the disclosed filter arrangement and of prior art filter arrangements. Figure 9A shows a schematic overview of trends whereas Figure 9B shows measurements. The figures show the magnitude of the scattering parameter S21 between two ports versus frequency.

The line 940 represents a prior art absorber filter, which was discussed in the background section. It can be seen that there is relatively high attenuation in the passband. The line 920 represent a prior art filter comprising a double circulator arrangement. It can be seen that this filter also suffers some losses in-band. It additionally presents limited attenuation out of band. The line 930 represents a prior art microwave lowpass filter based on resonant structures. This filter presents good in-band performance, but poor attenuation at higher frequencies, here from about 70 GHz.

The line 910 represents an example embodiment of the disclosed filter arrangement. This filter presents excellent low-frequency in-band performance and high-frequency stopband performance. In these example figures, the transition from the low attenuation in-band to high attenuation in the stopband is relatively slow for the disclosed filter arrangement compared to, e.g., the steeper line 930. In other words, the performance of the example arrangement is limited in the transition band. For quantum computing applications, however, this is not a crucial drawback since the mid-band is not critical. What is most critical is to have good performance in the high-frequency band. This is because for superconductors, radiation with photon-energy larger than twice the superconducting energy gap can break Cooper pairs and destroy superconductivity. For example, for bulk aluminum this corresponds to about 80 GHz. Other materials and material configurations have other gap energies. Furthermore, different embodiments of the disclosed filter arrangement present different characteristics in the transition band.

An FSS is normally a thin surface with some patterned arrangement designed to be either reflective, transparent, or absorptive based on the frequency of the field. The FSS can be seen as a filter in which the filtering is accomplished by the pattern. Such pattern is normally formed by some electrically conductive material such at metal. However, dielectric materials can be used instead or in combination. An example of an FSS is the screen on a microwave oven, which comprises a metallic mesh that is reflective for the frequencies used inside the oven to heat food while being relatively transparent for optical frequencies. In general however, an FSS must not necessarily be thin. Furthermore, it may be periodic, semi-periodic, or irregular. The FSS on the microwave oven, e.g., would still maintain its function, although perhaps with less effect, even if it were thicker and aperiodic.

The FSS in the disclosed filter arrangement preferably comprises an electrically conductive mesh or an electrically conductive surface punctuated with through holes. Some examples of FSS comprising a metallic mesh/grid are shown in WO2018164627A1. Various FSS arrangements comprising through holes is discuss in more detail below.

The transition from the low-frequency band to the high-frequency band is preferably instant, i.e., a transition bandwidth approaching zero. In practice, however, there is some transition bandwidth between the reflective and transparent frequency regions. An upper band edge of the low-frequency band can, e.g., be defined as when the magnitude of reflected waves are -3 dB relative to maximum reflection. The upper band edge is not necessarily constant along the main waveguiding path. For example, the first half of the main waveguiding path can comprise an FSS mesh with a first dimension of the holes in the mesh, and the second half of the main waveguiding path can comprise an FSS mesh with a second dimension of the holes in the mesh. In this case, the first half of the main waveguiding path has an FSS with a first upper band edge of the low-frequency band and the second half of the main waveguiding path has an FSS with a second upper band edge of the low-frequency band.

The FSS 120 may be arranged along at least 25% of the main waveguiding path 111, preferably as least 50%, and more preferably at least 75%. If, e.g., the FSS is a periodic mesh arranged on an outer conductor of a coaxial line, this periodic mesh constitutes a portion of the outer conductor along the waveguiding path. This way, the FSS significantly reduces the energy of electromagnetic waves in the high-frequency band that is coupled from the first port to the second port. The main waveguiding path preferably has a length of at least 1-2 wavelengths corresponding to an upper band edge of the low-frequency band. The length of the main waveguiding path can be chosen depending on the desired attenuation at the high-frequency band. A longer waveguiding path provides larger attenuation. For example we find a length of 2 wavelengths at the upper band-edge of the low frequency band to provide about 70 dB of attenuation at the low band edge of the upper frequency band. This upper band edge can, e.g., be the one of lowest frequency if it varies along the FSS.

A port is an interface in the main waveguiding path that can be interfaced with another electrical component, such as a cable. In the examples of Figures 1A-4B, the first port 112 and the second port 113 comprise respective SubMiniature version A (SMA) connectors 112, 115. The filter normally comprises two ports. However, any number of ports are possible. Furthermore, the filter arrangement can comprise any port technology. It can also comprise an integrated design where the filter is seamlessly integrated with some other structure. For example, the filter can be a structure on a printed circuit board, directly integrated to other microwave devices.

The first port 112 and the second port 113 are preferably be arranged to support wave propagation in the same frequency band. This frequency band is typically significantly wider than the low-frequency band of the FSS. For example, the lowest frequency of the upper band edge of the FSS can be 10 GHz and the frequency band of the first and the second ports can be 0-200 GHz. The same frequency band of the ports is interpreted broadly herein; the respective frequency bands may substantially overlap, such as an 80% overlap. However, the first and the second ports are preferably identical. Furthermore, the filter arrangement may comprise three ports or more. For example, the filter arrangement can be part of a coupler, diplexer, splitter etc.

The filter arrangement 100 may comprise an absorber arrangement 442 in connection to the FSS 120 on a side facing away from the main waveguiding path 111 of the waveguiding structure 110. The absorber arrangement may surround at least part of the waveguiding structure 110. An example absorber arrangement is shown in Figure 4B. With such arrangement, electromagnetic waves propagating away from the main waveguiding path can be attenuated. Preferably, the absorber arrangement attenuates electromagnetic waves in a wide band of frequencies, preferably overlapping with the high-frequency band of the FFS. The absorber arrangement can be some structure that attenuates electromagnetic waves and/or it can comprise an electromagnetic absorbent material.

An electromagnetic absorbent material generally comprises lossy materials that attenuate transmission and reflection of electromagnetic radiation. As such, an electromagnetic absorbent material should be neither a good electrical isolator (as in, e.g., polytetrafluoroethylene) nor a good electrical conductor (as in, e.g., copper). An example of an electromagnetic absorbent material is a foam material loaded with iron and/or carbon. Electromagnetic absorbent material can be resonant, i.e. a particular frequency is attenuated (e.g. 100 GHz), or broadband, i.e. a span of frequencies is attenuated (e.g. 10 GHz to 200 GHz). The attenuation of electromagnetic wave propagation in a direction is dependent on the thickness of the electromagnetic absorbent material in the same direction. One example of attenuation per length is 10 dB/cm at 2 GHz. Another example is 150 dB/cm at 30 GHz. These two examples of attenuation per length could be applicable to the disclosed filter arrangement 100.

Figure 4B shows an example filter arrangement 100 where the waveguiding structure is surrounded by an electromagnetic absorbent material. This figure is discussed in more detail below.

The absorber arrangement 442 hinders or at least reduces radiation in the high-frequency band from filter arrangement. This is normally desired as such radiation may leak into other parts of a system the filter arrangement is part of. In some applications, however, such radiation may not be of concern. The absorber arrangement also hinders unwanted radiation leaking into the main waveguiding path of the filter arrangement 100.

Alternatively, or in combination of, such radiation may be reduced by arranging an electromagnetically reflective shielding body 441 to surround at least part of the waveguiding structure 110. An example absorber arrangement is shown in Figure 4A. The shielding body preferably completely shields the filter arrangement from electromagnetic radiation of any frequency except at the ports of the waveguiding structure. In other words, electromagnetic waves can only enter and leave the filter arrangement through the ports. The electromagnetically reflective shielding body typically comprises an electrically conductive surface.

Preferably, the shielding arrangement 441 is used together with the absorber arrangement 442, where the absorber arrangement is arranged between the shielding arrangement and the waveguiding structure. This way, electromagnetic waves in the high-frequency band will propagate from the FSS to the shielding arrangement via the absorber, then be reflected at the shielding arrangement and propagate through the absorber arrangement again. Thus, the combination prevents the high-frequency waves propagating back into the main waveguiding path, which is an advantage. Figure 4B shows an example filter arrangement 100 where the waveguiding structure is surrounded by an electromagnetic absorbent material, which in turn is surrounded by a shielding arrangement.

If the waveguiding structure 110 is a coaxial line, such line would comprise an inner conductor 131 and an outer conductor 132, where the FSS 120 is arranged on the outer conductor and/or the inner conductor 131. Figures 1A-4B show example filter arrangements 100 where the waveguiding structure is a coaxial line. Figure 5 shows a schematic illustration of a coaxial line implementation of the filter arrangement 100. The cross-section of the coaxial structure need not be round. Other shapes, such as rectangular, are possible. The waveguiding structure of the coaxial line comprises the inner conductor and the outer conductor, which form the main waveguiding path. Electromagnetic waves are guided along the main waveguiding path 111 between the first port 112 and the second port 113, where the main waveguiding path is along and between the inner conductor 131 and the outer conductor 132. The inner and outer conductors may be separated by a dielectric material. However, the space between them can alternatively be filled with air, some gas, or vacuum, where the inner conductor is suspended by some suspension arrangement.

If the FSS 120 is arranged on at least the inner conductor 131 of the coaxial line, the inner conductor may comprise an electromagnetic absorbent material. The electric field is typically strongest around the inner conductor. Therefore, arranging electromagnetic absorbent material inside the inner conductor comprising the FSS effectively attenuates frequencies in the high-frequency band of the FSS.

It is common to operate microwave devices at frequencies where only a single mode can propagate. Therefore, the waveguiding structure is preferably arranged for single mode wave propagation in the low-frequency band. In other words, no higher order modes can propagate in that band.

For the coaxial implementation of the filter arrangement 100, a spatial arrangement between the inner and outer conductors is set by impedance matching of the filter, as well as a need to avoid higher-order mode propagation of the in-band frequencies. For a circular symmetric coaxial transmission line the distance is set by the quote of the outer diameter of the inner conductor and the inner diameter of the outer conductor and should be about 0.7 for a 50 Ohm system with a dielectric material with a constant of 1. In addition, the maximum distance is limited to guarantee single-mode operation to be below a specific fraction of the wavelength. Therefore, for a circular coaxial line, the inner circumference of the outer conductor is preferably less than a wavelength corresponding to the upper band edge of the low-frequency band of the FSS.

In the example filter arrangements of Figures 1A-8B, the FSS comprises apertures, i.e., through holes, in, e.g., the outer conductor 132 in Figures 1A-5. This type of FSS is discussed in more detail below.

The waveguiding structure of the filter arrangement may comprise conductors of metal such as copper and/or aluminum. These conductors are the inner and outer conductors in the coaxial case. The conductors of the waveguiding structure may comprise metals that do not superconduct at low temperatures so that the filter thermalize properly. However, making the conductors superconducting reduces losses significantly, making such embodiment suitable for certain applications where losses are prioritized.

The disclosed filter arrangement does not require any magnetic materials, which is in contrast to circulators or some absorber filters. This makes the disclosed filter arrangement suitable for applications that are sensitive to magnetic fields, but also for applications where high magnetic field strengths are present.

If the waveguiding structure 110 is a hollow waveguide, the FSS 120 is formed in the conductor 632 constituting the waveguide. Figure 6 shows a schematic illustration of a hollow waveguide implementation of the filter arrangement 100. The waveguiding structure of the hollow waveguide comprises this conductor 632, which forms the main waveguiding path. Electromagnetic waves are guided along the main waveguiding path 111 between the first port 112 and the second port 113, where the main waveguiding path is confined by the conductor 632. The hollow waveguide may be filled with a dielectric material or be filled with air. It can also be filled with some gas or vacuum. The hollow waveguide can be rectangular, circular, or any other shape allowing wave propagation. Hollow waveguides have a cutoff frequency for each wave mode that can propagate along the waveguide. The cutoff for the fundamental mode defines the lowest possible frequency the waveguide can support. The cutoff of the fundamental mode can thus be called a lower cutoff frequency. A filter arrangement 100 comprising a hollow waveguide thus becomes a bandpass filter. The lower cutoff frequency is preferably lower than a frequency where the FSS is no longer reflective, i.e., preferably lower than an upper edge of the low-frequency band of the FSS. In the example of Figure 6, the FSS comprises through holes in the conductor 632. In general, however, other types of FSS are possible.

If the waveguiding structure 110 is a planar transmission line, such line may comprise a conductive strip 731 and a ground plane 732, where the FSS 120 is arranged on the conductive strip and/or the ground plane. Figure 7 shows a schematic illustration of a planar transmission line implementation of the filter arrangement 100. The planar transmission line can, e.g., be a microstrip, or a stripline etc. In such lines, the electromagnetic wave propagates between the conductive strip and the ground plane. In other words, electromagnetic waves are guided along the main waveguiding path 111 between the first port 112 and the second port 113, where the main waveguiding path is confined by the conductive strip and the ground plane. The FSS does not disturb such wave propagation in the low-frequency band of the FSS, while the FSS allows frequencies in the high-frequency band of the FSS to propagate in other directions away from the main waveguiding path of the filter arrangement. The waveguiding structure of the planar transmission line comprises the conductive strip and the ground plane, which form the main waveguide path. The conductive strip and the ground plane can be separated by a dielectric material. However, the space between them can alternatively be filled with air, some gas, or vacuum, where the conductive strip is suspended by some suspension arrangement.

As mentioned, the FSS 120 of the filter arrangement 100 may comprise a plurality of waveguide apertures 121 arranged along the waveguiding structure 110, where each aperture is arranged to guide electromagnetic waves above a respective lower cutoff frequency along a respective aperture waveguiding path 122 away from the main waveguiding path 111. A filter arrangement 100 comprising such FSS should not be considered a resonant structure as in a conventional resonant microwave filter. The spacing between the waveguide apertures 121 is not related to a wavelength parameter. The opposite may be in some scenarios be preferred, i.e., it can be advantageous to vary spacing to not risk that resonances occur. In addition, all waveguide apertures 121 may be of different sizes and shapes to vary the upper band edge of the low-frequency band along the filter arrangement.

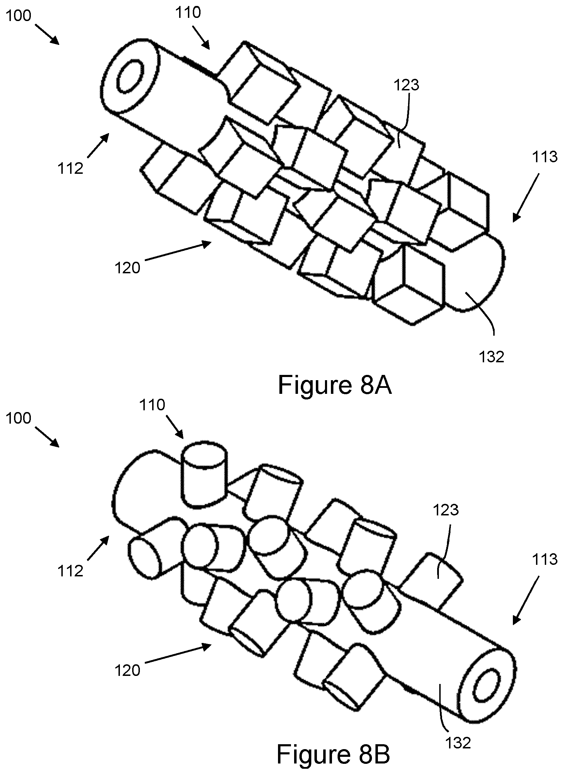

The shape of a waveguide aperture 121 can be rectangular, where the corners may be rounded corners. Such example waveguide apertures 121 are shown in Figures 1A-8A. Figure 8B shows an example filter arrangement where the waveguide aperture are circular. Other shapes of the waveguide apertures 121 are also possible. These figures show example arrangements where all apertures are of the same size and are periodically arranged along the main waveguiding path. However, as mentioned, same sizes and periodicity are not requirements.

The waveguide apertures can be considered as respective hollow waveguides, where the apertures have respective waveguiding paths 122 which guides waves in the high-frequency band of the FSS away from the main waveguiding path 111. Each waveguide aperture thus has a lower cutoff frequency, which is the cutoff of the fundamental mode. Frequencies below the lower cutoff frequency will experience the aperture and adjacent surface in the direction of the main waveguiding path as reflective. Waves with frequencies above the lower cutoff can propagate through the aperture weighing path 122 away from the main waveguiding path.

The waveguide apertures are arranged along at least a part of the main waveguiding path 111. Preferably, the aperture waveguiding path 122 of at least one waveguide aperture 121 is transversal to the main waveguiding path 111 of the waveguiding structure 110. This way waves in the high-frequency band can easily propagate away from the main waveguiding path.

If a plurality of apertures are sparsely spaced along the main waveguiding path, waves in the high-frequency band may be reflected on parts along the main waveguiding path where apertures are absent. Therefore, the FSS preferably accounts for at least 25% of the main waveguiding path 111, which was also discussed above. In addition, the main waveguiding path is preferably 1-2 wavelengths long, where the wavelength corresponds to an upper band edge of the low-frequency band. This upper band edge can, e.g., be the one of lowest frequency if it varies along the FSS. With such density of apertures and length of the main waveguiding path, it is likely that waves in the high-frequency band propagate away from the main waveguiding path, rather than between the first and the second ports, even if such waves may be reflected on parts along the main waveguiding path.

According to aspects, the length of at least one aperture waveguiding path 122 corresponds to a 0.05-0.5 wavelengths of a corresponding cutoff frequency of the waveguide aperture. Below cut-off, attenuation along the aperture waveguiding path has an exponential dependance of wavelength as well as length of the aperture waveguiding path. Thus, to stop waves in the low-frequency band from escaping through the waveguide apertures, thereby contributing loss to the in-band signal, the waveguide apertures need to be small enough, i.e., preferably present a cut-off above the intended passband, and long enough to not provide significant leakage of the in-band signal. In some embodiments, such as in Figures 1A-4B, the lengths of the apertures result in a relatively thick outer conductor 132. However, such lengths can be implemented in other ways as well. For example, if the outer conductor is relatively thin, the aperture waveguiding path 122 can be extended by arranging an extending waveguide tube from the outer conductor. However, it may be undesired to have the aperture waveguiding path longer than necessary to avoid a bulky filter arrangement. In our experiments, we have found that 0.1 wavelengths strikes a good balance.

At least one waveguide aperture 121 may comprise a dielectric material 123 occupying at least a part of its corresponding aperture waveguiding path 122. In other words, the dielectric material may fill part of a volume defined by the aperture waveguiding path 122. The dielectric material makes the waveguide aperture electrically larger relative to if they are, e.g., air filled. The dielectric material 123 can comprise, e.g., polytetrafluoroethylene (PTFE), which has a dielectric constant of about 2. Alternatively, silicone or sapphire could be used. Typically, the higher dielectric constant, the better, since that will make the holes larger electrically and will open up for making the filter smaller. However, materials with a lower dielectric constant may be less expensive. When including the dielectric material, the geometric properties of the main waveguiding path may be suitably adjusted to maintain a certain characteristic impedance, e.g., in dimensions between an inner and outer conductor if the waveguiding structure is a coaxial line.

The dielectric material 123 may extend from the aperture waveguiding path 122 of the waveguide aperture 121 into the main waveguiding path 111 of the waveguiding structure 110. This increases the portion of waves in the high-frequency band that propagate through the apertures rather than between the first and the second ports. In other words, the attenuation of the stopband of the filter arrangement is increased. The effect of this arrangement of the dielectric material is similar to an optical fiber, guiding radiation in a high-dielectric region. With this type of arrangement, it is advantageous that the dielectric material 123 is low-loss material to hinder attenuation in-band. At least the part of the dielectric material extending into the main waveguiding path should be a low-loss material. Other parts of the dielectric material 123, i.e., inside the aperture, perhaps a distance away from the main waveguiding path, may be lossy without affecting in-band performance. The dielectric material 123 may be lossy in a similar way as the absorber arrangement 442. When those parts of the dielectric material 123 are lossy, attenuation in the high-frequency band may occur without affecting in-band performance of the filter.

The extension of the dielectric material may, e.g., be a 20^{th} of a wavelength corresponding to an upper band edge of the low-frequency band. This extension could be measured from an edge of the aperture facing the main waveguiding path in an extension direction of the corresponding aperture waveguiding path.

If the waveguide aperture is circle with a corresponding cylindrical aperture waveguide path arranged on a rectangular waveguide where the circular aperture is flush with a sidewall of the waveguide, the dielectric material can fill the entire aperture waveguiding path and extend into the main waveguide path as a continuation of its cylindrical shape.

In Figures 1A-3B, the main waveguiding path is circular and the apertures have arced rectangular shapes facing into the main waveguiding path, where the arcing follow the inner radius of the outer conductor. In this case, an extending dielectric material can be seen as an extension from the arced circular shape of the aperture. Figure 2B shows four apertures with dielectric material extending into the main waveguiding path, where the extension is relative to the inner radius of the outer conductor. In general, the extension of dielectric material into the main waveguiding path can be seen as a volume of dielectric material occupying a part of the main waveguiding path.

The overall volume of the main waveguiding path can be the volume between the inner and outer conductor in a coaxial line. In a tubular hollow waveguide, the overall volume can be the inner volume of the tube.

Similarly, the dielectric material 123 may extend from the aperture waveguiding path 122 of the waveguide aperture 120 away from the main waveguiding path 111 of the waveguiding structure 110.

Referring back to Figure 7, this example planar transmission line embodiment comprises a conductive strip 731 and ground plane 732, where the FSS 120 is arranged on the ground plane. This arrangement also comprises a bottom conducive plane 733. The FSS comprises waveguide apertures 121 which are constructed as vias between the ground plane 732 and the bottom conductive plate 733. Such arrangement may be implemented using a printed circuit board (PCB). In an alternative arrangement, the ground plane comprises a metal slab, which is relatively thick compared to a conductive foil on a PCB, and the waveguide apertures are drilled or milled into that slab.

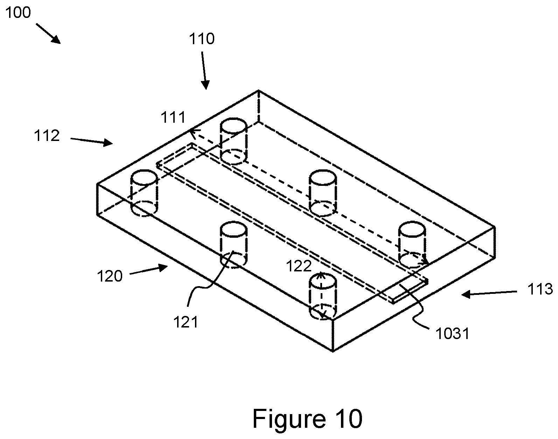

Figure 10 shows another example of a planar transmission line implementation of the filter arrangement 100. In this example, the planar transmission line is a stripline. The electromagnetic wave propagates between the conductive strip 1031 and the vias 121. This arrangement is very similar to via fences commonly used to create even ground potential around e.g. a stripline transmission line in a PCB. Electromagnetic waves are guided along the main waveguiding path 111 between the first port 112 and the second port 113, where the main waveguiding path is confined by the conductive strip and the vias. The waveguiding structure of the planar transmission line comprises the conductive strip and the vias, which form the main waveguide path. Furthermore in this example, the vias 121 can be seen as apertures and are constituting the FSS 120.

## Claims

1. A filter arrangement (100) for a quantum processor, comprising a waveguiding structure (110) arranged to guide electromagnetic waves along a main waveguiding path (111) between a first port (112) and a second port (113),
wherein the waveguiding structure (110) comprises a frequency-selective surface, FSS, (120) arranged along at least a part of the main waveguiding path (111), wherein the FSS is arranged to be electromagnetically reflective for a low-frequency band below 10 GHz and arranged to be electromagnetically transparent in a direction away from the main waveguiding path (111) at a high-frequency band above 20 GHz,
wherein the FSS (120) comprises a plurality of waveguide apertures (121) arranged along the waveguiding structure (110), wherein each aperture is arranged to guide electromagnetic waves above a respective lower cutoff frequency along a respective aperture waveguiding path (122) away from the main waveguiding path (111), and
wherein the waveguiding structure (110) is a coaxial line comprising an inner conductor (131) and an outer conductor (132), wherein the FSS (120) is arranged on the outer conductor and/or on the inner conductor (131).

2. The filter arrangement (100) according to claim 1, wherein the FSS (120) is arranged on at least the inner conductor (131), and wherein the inner conductor comprises an electromagnetic absorbent material.

3. The filter arrangement (100) according to any previous claim, wherein the first port (112) and the second port (113) are arranged to support wave propagation in the same frequency band.

4. The filter arrangement (100) according to any previous claim, comprising an absorber arrangement (442) in connection to the FSS (120) on a side facing away from the main waveguiding path (111) of the waveguiding structure (110).

5. The filter arrangement (100) according to any previous claim, wherein the length of at least one aperture waveguiding path (122) corresponds to 0.05-0.5 wavelengths of a corresponding lower cutoff frequency of the waveguide aperture.

6. The filter arrangement (100) according to any previous claim, wherein the aperture waveguiding path (122) of at least one waveguide aperture (121) is transversal to the main waveguiding path (111) of the waveguiding structure (110).

7. The filter arrangement (100) according to any previous claim, wherein at least one waveguide aperture (121) comprises a dielectric material (123) occupying at least a part of its corresponding aperture waveguiding path (122).

8. A filter arrangement (100) for a quantum processor, comprising a waveguiding structure (110) arranged to guide electromagnetic waves along a main waveguiding path (111) between a first port (112) and a second port (113),
wherein the waveguiding structure (110) comprises a frequency-selective surface, FSS, (120) arranged along at least a part of the main waveguiding path (111), wherein the FSS is arranged to be electromagnetically reflective for a low-frequency band and arranged to be electromagnetically transparent in a direction away from the main waveguiding path (111) at a high-frequency band,
wherein the FSS (120) comprises a plurality of waveguide apertures (121) arranged along the waveguiding structure (110), and wherein each aperture is arranged to guide electromagnetic waves above a respective lower cutoff frequency along a respective aperture waveguiding path (122) away from the main waveguiding path (111),
wherein the waveguiding structure (110) is a planar transmission line comprising a conductive strip (731) and a ground plane (732), wherein the FSS (120) is arranged on the conductive strip and/or the ground plane, and
wherein the length of at least one aperture waveguiding path (122) corresponds to at least 0.05 wavelengths of a corresponding lower cutoff frequency of the waveguide aperture.

9. The filter arrangement (100) according to claim 8, wherein the first port (112) and the second port (113) are arranged to support wave propagation in the same frequency band.

10. The filter arrangement (100) according to any of claims 8 to 9, comprising an absorber arrangement (442) in connection to the FSS (120) on a side facing away from the main waveguiding path (111) of the waveguiding structure (110).

11. The filter arrangement (100) according to any of claims 8 to 10, comprising an electromagnetically reflective shielding body (441) arranged to surround at least part of the waveguiding structure (110).

12. The filter arrangement (100) according to any of claims 8 to 11, wherein the length of at least one aperture waveguiding path (122) corresponds to 0.05-0.5 wavelengths of a corresponding lower cutoff frequency of the waveguide aperture.

13. The filter arrangement (100) according to any of claims 8 to 12, wherein the aperture waveguiding path (122) of at least one waveguide aperture (121) is transversal to the main waveguiding path (111) of the waveguiding structure (110).

14. The filter arrangement (100) according to any of claims 8 to 13, wherein at least one waveguide aperture (121) comprises a dielectric material (123) occupying at least a part of its corresponding aperture waveguiding path (122).

15. A quantum processor comprising a filter arrangement (100) according to any previous claim, wherein the quantum processor operates using control signals in the 0-10 GHz frequency band, wherein the quantum processor is sensitive to interference in a high frequency band around 100 GHz, the filter arrangement (100) being arranged to filter control signals of the quantum processor.

## Patentansprüche

1. Filteranordnung (100) für einen Quantenprozessor, umfassend
eine Wellenleiterstruktur (110), die so angeordnet ist, dass sie elektromagnetische Wellen entlang eines Hauptwellenleiterpfads (111) zwischen einem ersten Anschluss (112) und einem zweiten Anschluss (113) leitet,
wobei die Wellenleiterstruktur (110) eine frequenzselektive Oberfläche (FSS) (120) umfasst, die entlang mindestens eines Teils des Hauptwellenleiterpfads (111) angeordnet ist, wobei die FSS so angeordnet ist, dass sie für ein Niederfrequenzband unterhalb von 10 GHz elektromagnetisch reflektierend ist, und so angeordnet ist, dass sie für ein Hochfrequenzband oberhalb von 20 GHz in einer Richtung weg vom Hauptwellenleiterpfad (111) elektromagnetisch transparent ist,
wobei die FSS (120) eine Vielzahl von Wellenleiteröffnungen (121) umfasst, die entlang der Wellenleiterstruktur (110) angeordnet sind, wobei jede Öffnung so angeordnet ist, dass sie elektromagnetische Wellen oberhalb einer jeweiligen unteren Grenzfrequenz entlang eines jeweiligen Öffnungswellenleiterpfads (122) vom Hauptwellenleiterpfad (111) wegführt, und
wobei die Wellenleiterstruktur (110) eine Koaxialleitung umfassend einen Innenleiter (131) und einen Außenleiter (132) ist, wobei die FSS (120) auf dem Außenleiter und/oder auf dem Innenleiter (131) angeordnet ist.

2. Filteranordnung (100) nach Anspruch 1, wobei die FSS (120) mindestens auf dem Innenleiter (131) angeordnet ist und wobei der Innenleiter ein elektromagnetisch absorbierendes Material umfasst.

3. Filteranordnung (100) nach einem der vorstehenden Ansprüche, wobei der erste Anschluss (112) und der zweite Anschluss (113) so angeordnet sind, dass sie die Wellenausbreitung im gleichen Frequenzband unterstützen.

4. Filteranordnung (100) nach einem der vorstehenden Ansprüche, umfassend eine Absorberanordnung (442) in Verbindung mit der FSS (120) auf einer Seite, die vom Hauptwellenleiterpfad (111) der Wellenleiterstruktur (110) abgewandt ist.

5. Filteranordnung (100) nach einem der vorstehenden Ansprüche, wobei die Länge mindestens eines Öffnungswellenleiterpfads (122) 0,05 bis 0,5 Wellenlängen einer entsprechenden unteren Grenzfrequenz der Wellenleiteröffnung entspricht.

6. Filteranordnung (100) nach einem der vorstehenden Ansprüche, wobei der Öffnungswellenleiterpfad (122) mindestens einer Wellenleiteröffnung (121) quer zum Hauptwellenleiterpfad (111) der Wellenleiterstruktur (110) verläuft.

7. Filteranordnung (100) nach einem der vorstehenden Ansprüche, wobei mindestens eine Wellenleiteröffnung (121) ein dielektrisches Material (123) umfasst, das mindestens einen Teil des zugehörigen Wellenleiterpfads (122) der Öffnung einnimmt.

8. Filteranordnung (100) für einen Quantenprozessor, umfassend
eine Wellenleiterstruktur (110), die so angeordnet ist, dass sie elektromagnetische Wellen entlang eines Hauptwellenleiterpfads (111) zwischen einem ersten Anschluss (112) und einem zweiten Anschluss (113) leitet,
wobei die Wellenleiterstruktur (110) eine frequenzselektive Oberfläche (FSS) (120) umfasst, die entlang mindestens eines Teils des Hauptwellenleiterpfads (111) angeordnet ist, wobei die FSS so angeordnet ist, dass sie für ein Niederfrequenzband elektromagnetisch reflektierend ist, und so angeordnet ist, dass sie für ein Hochfrequenzband in einer Richtung weg vom Hauptwellenleiterpfad (111) elektromagnetisch transparent ist,
wobei die FSS (120) eine Vielzahl von Wellenleiteröffnungen (121) umfasst, die entlang der Wellenleiterstruktur (110) angeordnet sind, und wobei jede Öffnung so angeordnet ist, dass sie elektromagnetische Wellen oberhalb einer jeweiligen unteren Grenzfrequenz entlang eines jeweiligen Öffnungswellenleiterpfads (122) vom Hauptwellenleiterpfad (111) wegführt,
wobei die Wellenleiterstruktur (110) eine planare Übertragungsleitung umfassend einen leitfähigen Streifen (731) und eine Massefläche (732) ist, wobei die FSS (120) auf dem leitfähigen Streifen und/oder der Massefläche angeordnet ist, und
wobei die Länge mindestens eines Öffnungswellenleiterpfads (122) mindestens 0,05 Wellenlängen einer entsprechenden unteren Grenzfrequenz der Wellenleiteröffnung entspricht.

9. Filteranordnung (100) nach Anspruch 8, wobei der erste Anschluss (112) und der zweite Anschluss (113) so angeordnet sind, dass sie die Wellenausbreitung im gleichen Frequenzband unterstützen.

10. Filteranordnung (100) nach einem der Ansprüche 8 bis 9, umfassend eine Absorberanordnung (442) in Verbindung mit der FSS (120) auf einer Seite, die vom Hauptwellenleiterpfad (111) der Wellenleiterstruktur (110) abgewandt ist.

11. Filteranordnung (100) nach einem der Ansprüche 8 bis 10, umfassend einen elektromagnetisch reflektierenden Abschirmkörper (441), der so angeordnet ist, dass er mindestens einen Teil der Wellenleiterstruktur (110) umschließt.

12. Filteranordnung (100) nach einem der Ansprüche 8 bis 11, wobei die Länge mindestens eines Öffnungswellenleiterpfads (122) 0,05 bis 0,5 Wellenlängen einer entsprechenden unteren Grenzfrequenz der Wellenleiteröffnung entspricht.

13. Filteranordnung (100) nach einem der Ansprüche 8 bis 12, wobei der Öffnungswellenleiterpfad (122) mindestens einer Wellenleiteröffnung (121) quer zum Hauptwellenleiterpfad (111) der Wellenleiterstruktur (110) verläuft.

14. Filteranordnung (100) nach einem der Ansprüche 8 bis 13, wobei mindestens eine Wellenleiteröffnung (121) ein dielektrisches Material (123) umfasst, das mindestens einen Teil des zugehörigen Öffnungswellenleiterpfads (122) einnimmt.

15. Quantenprozessor, umfassend eine Filteranordnung (100) nach einem der vorstehenden Ansprüche, wobei der Quantenprozessor mit Steuersignalen im Frequenzband von 0 bis 10 GHz arbeitet und wobei der Quantenprozessor empfindlich auf Störungen in einem Hochfrequenzband um 100 GHz reagiert, wobei die Filteranordnung (100) so angeordnet ist, dass sie Steuersignale des Quantenprozessors filtert.

## Revendications

1. Agencement de filtrage (100) pour un processeur quantique, comprenant
une structure de guidage d'ondes (110) agencée pour guider les ondes électromagnétiques le long d'un chemin principal de guidage d'ondes (111) entre un premier port (112) et un second port (113),
dans lequel la structure de guidage d'ondes (110) comprend une surface sélective en fréquence, FSS (120) agencée le long d'au moins une partie du chemin principal de guidage d'ondes (111), dans lequel la FSS est agencée pour être électromagnétiquement réfléchissante pour une bande de basse fréquence inférieure à 10 GHz et agencée pour être électromagnétiquement transparente dans une direction à l'écart du chemin principal de guidage d'ondes (111) à une bande de haute fréquence supérieure à 20 GHz,
dans lequel la FSS (120) comprend une pluralité d'ouvertures de guide d'ondes (121) agencées le long de la structure de guidage d'ondes (110), dans lequel chaque ouverture est agencée pour guider les ondes électromagnétiques au-dessus d'une fréquence de coupure inférieure respective le long d'un chemin de guidage d'ondes à ouverture respectif (122) à l'écart du chemin principal de guidage d'ondes (111), et
dans lequel la structure de guidage d'ondes (110) est une ligne coaxiale comprenant un conducteur interne (131) et un conducteur externe (132), dans lequel la FSS (120) est agencée sur le conducteur externe et/ou sur le conducteur interne (131).

2. Agencement de filtrage (100) selon la revendication 1, dans lequel la FSS (120) est agencée sur au moins le conducteur interne (131), et dans lequel le conducteur interne comprend un matériau absorbant électromagnétique.

3. Agencement de filtrage (100) selon l'une quelconque revendication précédente, dans lequel le premier port (112) et le second port (113) sont agencés pour supporter la propagation d'ondes dans la même bande de fréquence.

4. Agencement de filtrage (100) selon l'une quelconque revendication précédente, comprenant un agencement d'absorption (442) en liaison avec la FSS (120) sur un côté opposé au chemin principal de guidage d'ondes (111) de la structure de guidage d'ondes (110).

5. Agencement de filtrage (100) selon l'une quelconque revendication précédente, dans lequel la longueur d'au moins un chemin de guidage d'ondes à ouverture (122) correspond à 0,05-0,5 longueur d'onde d'une fréquence de coupure inférieure correspondante de l'ouverture de guide d'ondes.

6. Agencement de filtrage (100) selon l'une quelconque revendication précédente, dans lequel le chemin de guidage d'ondes à ouverture (122) d'au moins une ouverture de guide d'onde (121) est transversal au chemin principal de guidage d'ondes (111) de la structure de guidage d'ondes (110).

7. Agencement de filtrage (100) selon l'une quelconque revendication précédente, dans lequel au moins une ouverture de guide d'ondes (121) comprend un matériau diélectrique (123) occupant au moins une partie de son chemin de guidage d'ondes à ouverture correspondant (122).

8. Agencement de filtrage (100) pour un processeur quantique, comprenant
une structure de guidage d'ondes (110) agencée pour guider les ondes électromagnétiques le long d'un chemin principal de guidage d'ondes (111) entre un premier port (112) et un second port (113),
dans lequel la structure de guidage d'ondes (110) comprend une surface sélective en fréquence, FSS (120) agencée le long d'au moins une partie du chemin principal de guidage d'ondes (111), dans lequel la FSS est agencée pour être électromagnétiquement réfléchissante pour une bande de basse fréquence et agencée pour être électromagnétiquement transparente dans une direction à l'écart du chemin principal de guidage d'ondes (111) à une bande de haute fréquence,
dans lequel la FSS (120) comprend une pluralité d'ouvertures de guide d'ondes (121) agencées le long de la structure de guidage d'ondes (110), et dans lequel chaque ouverture est agencée pour guider les ondes électromagnétiques au-dessus d'une fréquence de coupure inférieure respective le long d'un chemin de guidage d'ondes à ouverture respectif (122) à l'écart du chemin principal de guidage d'ondes (111),
dans lequel la structure de guidage d'ondes (110) est une ligne de transmission plane comprenant une bande conductrice (731) et un plan de masse (732), dans lequel la FSS (120) est agencée sur la bande conductrice et/ou le plan de masse, et
dans lequel la longueur d'au moins un chemin de guidage d'ondes à ouverture (122) correspond à au moins 0,05 longueur d'onde d'une fréquence de coupure inférieure correspondante de l'ouverture de guide d'ondes.

9. Agencement de filtrage (100) selon la revendication 8, dans lequel le premier port (112) et le second port (113) sont agencés pour supporter la propagation d'ondes dans la même bande de fréquence.

10. Agencement de filtrage (100) selon l'une quelconque des revendications 8 à 9, comprenant un agencement d'absorption (442) en liaison avec la FSS (120) sur un côté opposé au chemin principal de guidage d'ondes (111) de la structure de guidage d'ondes (110).

11. Agencement de filtrage (100) selon l'une quelconque des revendications 8 à 10, comprenant un corps de blindage électromagnétiquement réfléchissant (441) agencé pour entourer au moins une partie de la structure de guidage d'ondes (110).

12. Agencement de filtrage (100) selon l'une quelconque des revendications 8 à 11, dans lequel la longueur d'au moins un chemin de guidage d'ondes à ouverture (122) correspond à 0,05-0,5 longueur d'onde d'une fréquence de coupure inférieure correspondante de l'ouverture de guide d'ondes.

13. Agencement de filtrage (100) selon l'une quelconque des revendications 8 à 12, dans lequel le chemin de guidage d'ondes à ouverture (122) d'au moins une ouverture de guide d'onde (121) est transversal au chemin principal de guidage d'ondes (111) de la structure de guidage d'ondes (110).

14. Agencement de filtrage (100) selon l'une quelconque des revendications 8 à 13, dans lequel au moins une ouverture de guide d'ondes (121) comprend un matériau diélectrique (123) occupant au moins une partie de son chemin de guidage d'ondes à ouverture correspondant (122).

15. Processeur quantique comprenant un agencement de filtrage (100) selon l'une quelconque revendication précédente, dans lequel le processeur quantique fonctionne à l'aide de signaux de commande dans la bande de fréquences 0-10 GHz, dans lequel le processeur quantique est sensible aux interférences dans une bande de haute fréquence autour de 100 GHz, l'agencement de filtrage (100) étant agencé pour filtrer les signaux de commande du processeur quantique.
